# EUROPÄISCHE PATENTSCHRIFT

(11) **EP 2 954 120 B1**
(45) Veröffentlichungstag und Bekanntmachung des Hinweises auf die Patenterteilung: **20.03.2019**
(21) Anmeldenummer: 13718128.5
(22) Anmeldetag: 22.04.2013
(51) Int. Cl.: E02F 3/32, B60P 1/00, B60R 1/00, B66C 15/04, E01C 19/00, E02F 9/24, E02F 9/26, H04N 7/18, H04N 5/225, H04N 5/247

(54) **BAUMASCHINE MIT EINER ÜBERWACHUNGSEINRICHTUNG**
CONSTRUCTION MACHINE HAVING A MONITORING DEVICE
ENGIN DE CHANTIER COMPORTANT UN DISPOSITIF DE SURVEILLANCE

(30) Priorität: 06.02.2013 DE 102013002079
(43) Veröffentlichungstag der Anmeldung: 16.12.2015
(73) Patentinhaber: Volvo Construction Equipment Germany GmbH, 54329 Konz-Könen (DE)
(72) Erfinder: BAEUMCHEN, Henning, 66564 Ottweiler (DE)
(74) Vertreter: Henseler, Daniela
(86) Internationale Anmeldenummer: PCT/EP2013/001194
(87) Internationale Veröffentlichungsnummer: WO 2014/121810

(56) Entgegenhaltungen:
- EP-A1- 2 181 898
- WO-A1-2012/053105
- WO-A1-2012/127576
- JP-A- 2004 322 979
- JP-A- 2008 240 362
- JP-A- 2010 121 270
- JP-A- 2012 188 899

## Beschreibung

Die Erfindung betrifft eine Baumaschine, insbesondere Bagger-, Lade-, Fräs-, Walzen-, Fertiger- oder Transportmaschine nach dem Oberbegriff des Anspruchs 1.

Aus JP-A-2010121270 ist eine Baumaschine mit den Merkmalen des Oberbegriffs des Anspruchs 1 bekannt. Aus DE 93 17 225 U1 ist ein Straßenfertiger mit einem ein Fahrwerk aufweisenden Chassis bekannt. An dem Chassis ist neben Funktionskomponenten wie eine Einbaubohle auch eine Kabine mit einem darin untergebrachten Führerstand angeordnet. Um das Arbeiten der Einbaubohle und/oder anderer Funktionskomponenten seitlich des oder hinter dem Fertiger visuell überwachen zu können, sind an geeigneten Stellen Kameras angeordnet, die mit wenigstens einem in der Kabine angeordneten Monitor verbunden sind. Als nachteilig erwiesen hat sich, dass die Sichtbarmachung der zu überwachenden Bereiche außerhalb der Maschine durch die Kamerabereiche trotz einer Signalverarbeitung der erzeugten Bilder lückenhaft ist.

Aus US 7,466,337 ist bekannt, eine Rückfahrkamera zur Verbesserung eines Überwachungsbereiches zwischen einem Fahrwerk und einer Drehkonstruktion eines Baggers zu montieren. Die Position der Rückfahrkamera ist dann niedriger und zudem vor Umwelteinflüssen geschützt. Hindernisse im Rückfahrbereich sollen dadurch besser und wartungsfreier erkannt werden.

Aus DE 11 2004 002 539 T5 ist bekannt, Überwachungskameras für Kamerabereiche an gewünschten Positionen der Baumaschine anzubringen. Die Kamerabereiche können angeordnet sein, um die Hinterseite, die Vorderseite und die Seiten der Baumaschine zu überwachen. Da eine Überwachungskamera als eine Hilfseinrichtung zum Ausführen einer Arbeit verwendet wird, bei der eine Baumaschine sicher und einfach verwendet werden kann, ist eine Anzeige zum Zeigen des Bildes der Kamera in einer Fahrerkabine vorgesehen. Jedoch ist der Raum der Fahrerkabine begrenzt, so dass ein gesonderter Bildschirm (Monitor) nur für die Kamerabilder eine zusätzliche Sichtversperrung zur Folge hätte, da ein Monitor für eine Messwertanzeige der zum Bedienen der Baumaschine erforderlichen Parameter bereits vorhanden ist. Es ist deshalb bekannt, für nur einen Monitor einen Umschaltbetrieb vorzusehen zwischen einem Messwertanzeigemodus und einem Kameraanzeigemodus.

Die Überwachungskameras sind dabei nicht fixiert, sondern ermöglichen eine Bewegung der Fotografieposition, um den Überwachungsbereich nicht zu begrenzen. Mit einer Kamerasteuereinheit kann die Kamerahaltung verändert und ein Fokussiermechanismus für ein Zoomobjektiv einer Kamera gesteuert werden. Als Montagestellen sind eine Mehrzahl Montagepositionen vorgesehen, wobei eine Vielzahl von Kamerabereichen an einer Stelle montiert werden kann. Die Fotografierrichtung aller montierten Kameras ist geneigt bezüglich der Flächennormalen durch den Fixierpunkt der Montagestelle. Die Position eines blinden Flecks im Arbeitsfeld der Baumaschine kann so durch die Kamerabereiche eingefangen werden, wozu die Bilddaten, die durch die Kamerabereiche fotografiert werden, zu einem Bildeingabebereich des Monitors gesandt werden. Nachteilig ist die Vielzahl Kamerabereiche, die erforderlich ist, um dem Maschinisten beim Betrieb der Baumaschine Einsicht in blinde Flecke im Außenbereich um die Baumaschine zu ermöglichen.

Der Erfindung liegt daher die Aufgabe zugrunde, eine Baumaschine zu schaffen, deren montierte Überwachungskameras eine verbesserte Überwachung eines Gefahrenbereichs um die Baumaschine erlauben.

Diese Aufgabe wird durch die Merkmale des Anspruchs 1 gelöst.

Hierdurch wird eine Baumaschine geschaffen, die mit nur mindestens drei Montagestellen für nur mindestens drei Kamerabereiche ein Visualisierungssystem schafft, das dem Fahrer in der Kabine eine Sicht auch auf solche Bereiche liefert, die nicht im Blickfeld des Fahrers liegen. Eine Gefährdungsgefahr durch die funktionsbedingt teilweise unübersichtliche Baumaschine ist dadurch deutlich reduziert, da die peripheren Punkte des Außenraums um die Baumaschine für den Fahrer visuell wahrnehmbar sind.

Die Qualität der visuellen Wahrnehmung ist dabei erfindungsgemäß deutlich verbessert. Denn die erfindungsgemäß gewählten Montagestellen für die Überwachungskameras in Verbindung mit deren erfindungsgemäß gewählten Fotografierrichtung und deren erfindungsgemäß gewählten optischen Systems erzeugen Bildaufnahmen, die eine gleichmäßige optische Abbildung des Außenraums um die Baumaschine ergeben.

Die Bildfelder der Kamerabereiche überdecken sich nämlich nur teilweise, wodurch Nahtstellen zwischen den Bildfeldern unterschiedlicher Kamerabereiche minimiert werden. Überraschenderweise hat sich erfindungsgemäß herausgestellt, dass nicht eine Erhöhung der Anzahl an Kamerabereiche die Qualität der optischen Abbildung verbessert, sondern vielmehr eine Reduzierung derselben unter Reduzierung der Nahtstellen sich überdeckender Bildbereiche benachbarter Kamerabereiche. Eine Bildverarbeitung der erfindungsgemäßen Kamerabereiche führt daher zu weniger nahtbedingter Sichtfehler. Insbesondere Nähte der Bildfelder von seitlichen Kamerabereichen sind dabei zudem weniger kritisch, da sie überwiegend vor der Baumaschine im direkten Blickfeld des Fahrers liegen.

Das erfindungsgemäße Visualisierungssystem ist bei jeder Art Baumaschine verwendbar, wobei zu den Baumaschinen insbesondere Bagger-, Lade-, Fräs-, Walzen- oder Fertigermaschinen zählen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine Seitenansicht einer Baumaschine in Form eines Baggers, auf der die Anordnung von Überwachungskameras gezeigt ist,
Fig. 2 zeigt schematisch eine perspektivische Teilansicht schräg von vorn einer Baumaschine in Form eines Baggers, auf der die Anordnung von Überwachungskameras gezeigt ist,
Fig. 3 zeigt schematisch eine Draufsicht der Bildfelder von drei Kamerabereichen zur Überwachung des Außenbereichs um eine Baumaschine in Form eines Baggers,
Fig. 4 zeigt schematisch eine Draufsicht des Bildfeldes einer in Fahrtrichtung linken Seitenkamera,
Fig. 5 zeigt schematisch eine Seitenansicht des Bildfeldes der in Fahrtrichtung linken Seitenkamera,
Fig. 6 zeigt schematisch eine Vorderansicht des Bildfeldes der in Fahrrichtung linken Seitenkamera,
Fig. 7 zeigt schematisch eine Draufsicht des Bildfeldes einer in Fahrtrichtung rechten Seitenkamera,
Fig. 8 zeigt schematisch eine Seitenansicht des Bildfeldes der in Fahrtrichtung rechten Seitenkamera,
Fig. 9 zeigt schematisch eine Rückansicht des Bildfeldes der in Fahrrichtung rechten Seitenkamera,
Fig. 10 zeigt schematisch eine Draufsicht des Bildfeldes einer Heckkamera,
Fig. 11 zeigt schematisch eine Seitenansicht des Bildfeldes der Heckkamera,
Fig. 12 zeigt schematisch eine Vorderansicht des Bildfeldes der Heckkamera.

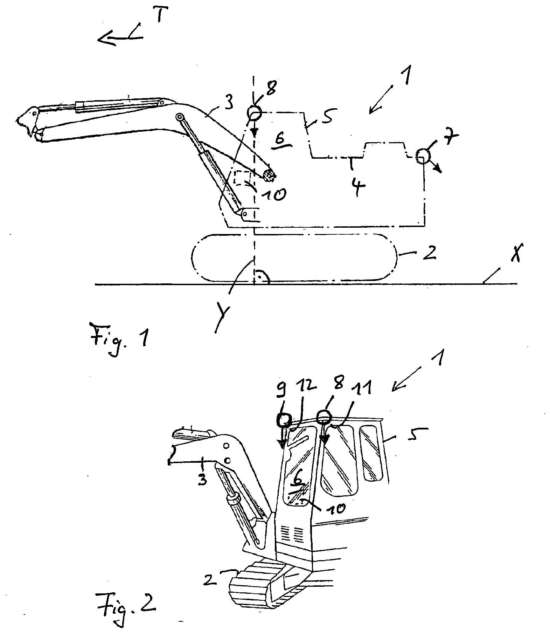

Wie Fig. 1 und Fig. 2 zeigen, betrifft die Erfindung eine Baumaschine 1 mit einem Fahrwerk 2, mindestens einer Funktionskomponente 3 und einem Chassis 4, an dem eine Kabine 5 für mindestens einen Führerstand 6 angeordnet ist. Die Baumaschine 1 ist hier beispielsweise ein Bagger. Die Funktionskomponente 3 ist bei einem Bagger beispielsweise eine Grabausrüstung, wie Fig. 1 und Fig. 2 zeigen. Die Baumaschine 1 kann jede Art von Baumaschine, insbesondere auch eine Lade-, Fräs-, Walzen- oder Fertigermaschine sein. Zu den Baumaschinen zu zählen sind hier ferner die Transportgeräte wie Tieflader, Baustellenkipper mit einer Ladefläche als Funktionskomponente usw.

Wie Fig. 1 und Fig. 2 weiterhin zeigen, sind an der Baumaschine 1 Überwachungskameras 7, 8, 9 montiert, die mit wenigstens einem in der Kabine 5 angeordneten Monitor 10 verbunden sind. Mittels der Überwachungskameras 7, 8, 9 wird das Arbeiten seitlich als auch hinter der Baumaschine 1 visuell überwachbar gestaltet.

Es sind mindestens drei Überwachungskameras 7, 8, 9 vorgesehen, die jeweils ein Weitwinkelobjektiv als optische Komponente zur reellen optischen Abbildung eines Außenbereichs um die Baumaschine 1 aufweisen. Bezüglich ihrer Montagestelle und ihrer Fotografierrichtung sind die Überwachungskameras 7, 8, 9 derart wie folgt bestimmt.

Wie Fig. 1 zeigt, ist eine erste Überwachungskamera 7 eine Heckkamera zur Überwachung der Hinterseite der Baumaschine 1, deren Kamerabereich eine Fotografierrichtung geneigt zur Aufstellebene X der Baumaschine 1 besitzt. Die Fotografierrichtung ist durch einen Pfeil angegeben. Die erste Überwachungskamera 7 ist vorzugsweise erhöht montiert, beispielsweise auf der Abdeckung eines Gegengewichts eines Baggers, damit ein Rückfahrbereich weiträumig erfasst werden kann.

Eine zweite Überwachungskamera 8 ist eine Seitenkamera zur Überwachung der in Fahrtrichtung T linken Seite der Baumaschine 1. Wie Fig. 1 in Zusammenschau mit Fig. 2 zeigt, ist die dritte Überwachungskamera 9 eine Seitenkamera zur Überwachung der in Fahrtrichtung T rechten Seite der Baumaschine. Die Montagestellen für die zweite und dritte Überwachungskamera 8, 9 liegen an einem oberen linken bzw. rechten Eckbereich 11, 12 zur Vorderseite der Maschine 1. Die Kamerabereiche der zweiten und dritten Überwachungskamera 8, 9 besitzen jeweils eine Fotografierrichtung, die in einem Winkelbereich ± 5° zur Vertikalen Y der Aufstellebene X, bzw. der Aufstandsfläche, der Maschine 1 liegt, wie Fig. 1 zeigt. Die Eckbereiche 11, 12 können an der Kabine 5 als Teil der Maschine 1 angeordnet sein.

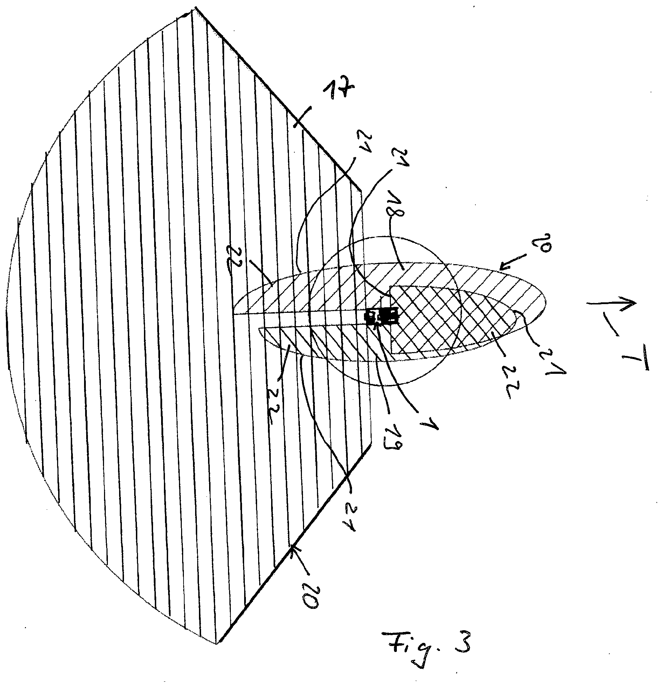

Die Kamerabereiche der mindestens drei Überwachungskameras 7, 8, 9 ergeben Bildfelder 17, 18, 19 zur Überwachung von Außenbereichen um die Baumaschine 1, die mittels einer Bildverarbeitung als Teilbildfelder zu einem Gesamtbild 20 zusammengesetzt werden, wie Fig. 3 zeigt. Das Gesamtbild 20 enthält Schnittmengen 22 von zwei Bildfeldern 18, 19 bzw. 17, 18 und 17, 19, die durch Nahtlinien 21 begrenzt sind. Die Anzahl und Länge der Nahtlinie 21 ist durch die Verwendung von nur mindestens drei Überwachungskameras 7, 8, 9 verhältnismäßig gering.

Bei dem in Fig. 3 dargestellten Ausführungsbeispiel einer Baumaschine 1 mit mindestens drei Überwachungskameras 7, 8, 9 sind die zweite und dritte Überwachungskamera 8, 9 auf unterschiedlichen Höhenniveaus zur Aufstellebene X der Baumaschine 1 angeordnet. Die dritte Überwachungskamera 9 zur Überwachung der rechten Seite der Baumaschine 1 ist auf einem niedrigeren Niveau angeordnet als die zweite Überwachungskamera 8, wodurch das Bildfeld 19 kleiner dimensioniert ist bezüglich seiner Abmessungen als das Bildfeld 18. Für eine wählbare Justierung der Montage der Überwachungskameras 7, 8, 9 an der Baumaschine 1 können diese verschieb- und/oder drehbar montiert sein, und zwar in vertikaler als auch horizontaler Richtung. Die Bildfelder 18, 19 und deren Nahtlinien 21 sind so zueinander verstellbar, damit die Überdeckung durch eine Funktionskomponente 3 berücksichtigt werden kann.

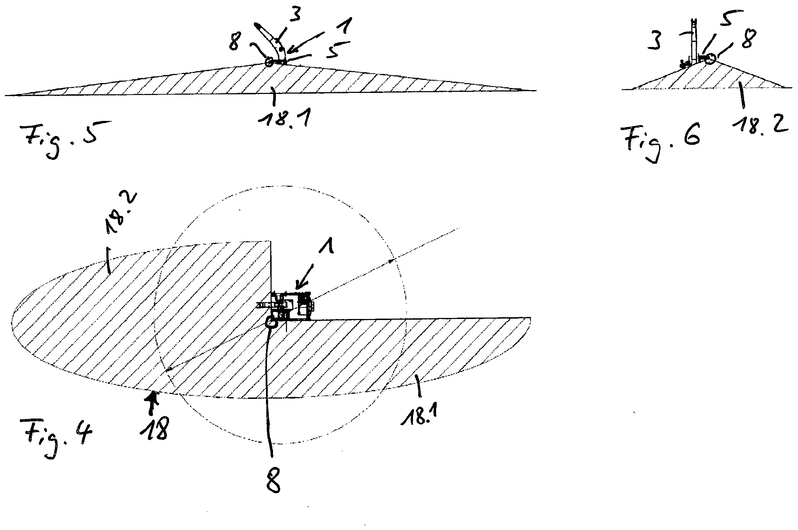

Fig. 4 bis Fig. 6 zeigen das Bildfeld 18 der zweiten Überwachungskamera 8 für die linke Seite der Baumaschine 1. Dadurch, dass die zweite Überwachungskamera 8 im oberen linken Eckbereich 11 der Kabine 5 montiert ist, setzt sich das Bildfeld 18 zusammen aus einem linken Seitenbereich 18.1 und einem linken Vorderbereich 18.2. Der linke Vorderbereich 18.2 ist eine vorderseitige Erstreckung des linken Seitenbereichs 18.1 mit einem frontseitigen Abschnitt.

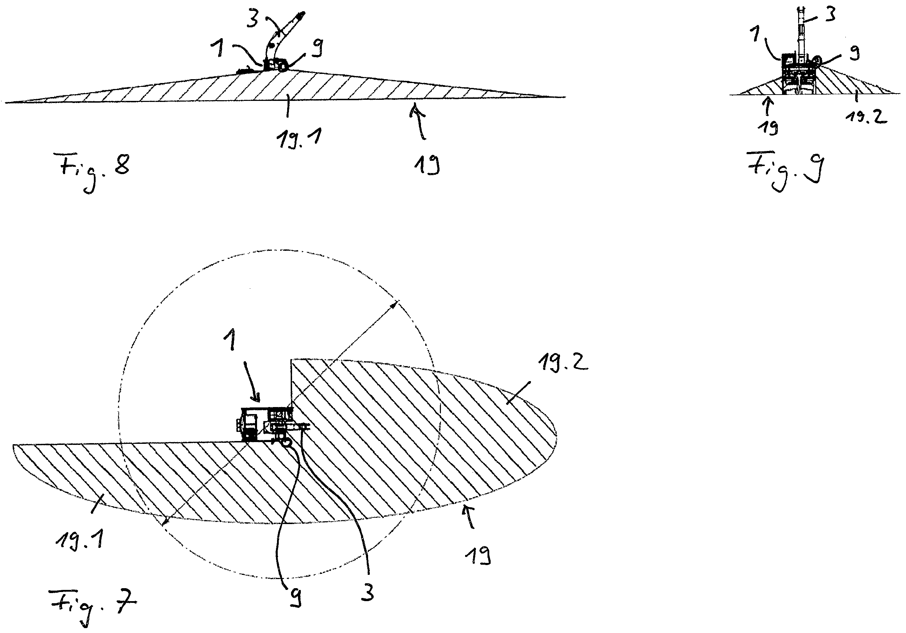

Fig. 7 bis 9 zeigen das Bildfeld 19 der dritten Überwachungskamera 9 für die rechte Seite der Baumaschine 1. Dadurch, dass die dritte Überwachungskamera 9 im oberen rechten Eckbereich 12 der Kabine 5 montiert ist, setzt sich das Bildfeld 19 zusammen aus einem rechten Seitenbereich 19.1 und einem rechten Vorderbereich 19.2. Der rechte Vorderbereich 19.2 ist eine vorderseitige Erstreckung des rechten Seitenbereichs 19.1 mit einem frontseitigen Abschnitt.

Die Bildfelder 18, 19 unterschieden sich zudem bezüglich ihrer räumlichen Erstreckung, die aus einer unterschiedlichen Höhenlage der Überwachungskameras 8, 9 bezogen auf die Aufstellebene X erfolgt. Der rechte und der linke Eckbereich 11, 12 der Kabine 5 beziehen sich daher auf eine entsprechend wählbare räumliche Erstreckung der Bildfelder 18, 19.

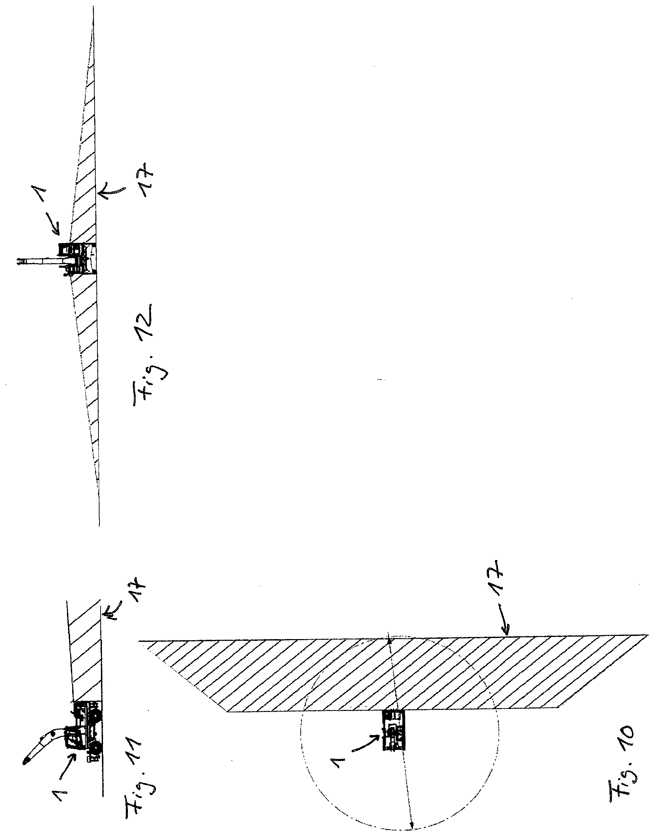

Fig. 10 bis Fig. 12 zeigen das Bildfeld 17 der ersten Überwachungskamera 7 in der an sich bekannten Weise für Rückfahrkameras. Ein Vorteil der erfindungsgemäßen Baumaschine 1 liegt folglich auch darin, dass eine erste Überwachungskamera 7 verwendet wird, die auch separat geschaltet als einfache Rückfahrkamera genutzt werden kann.

Die Bildfelder 17, 18, 19 der Überwachungskameras 7, 8, 9 werden wie vorstehend beschrieben einerseits bestimmt durch die Montagestelle auf der Baumaschine 1. Mitbestimmend ist aber auch das jeweils verwendete Weitwinkelobjektiv der optischen Komponente des optischen Abbildungssystems der Überwachungskameras 7, 8, 9. Die zweite und dritte Überwachungskamera 8, 9 weisen vorzugsweise Weitwinkelobjektive mit Bildwinkeln von mindestens 135° vertikal und mindestens 130° horizontal auf.

Die Fotografierrichtung der zweiten und dritten Überwachungskamera 8, 9 liegt vorzugsweise im Winkelbereich ± 3°, besonders bevorzugt ± 1,5° zur Vertikalen Y der Aufstellebene X der Baumaschine. Die Fotografierrichtung der ersten Überwachungskamera 7 liegt vorzugsweise in einem Winkelbereich ± 15° zu einer 45°-Neigung zur Aufstellebene X der Maschine 1. Die Überwachungskamera 7 kann auch in einem Winkelbereich 0°- 60° zur Aufstellebene X der Maschine 1 angeordnet sein.

Der in den Fig. 4, Fig. 7 und Fig. 10 gestrichelt dargestellte Kreis gibt nach ISO5006 einen Radius von 12 m zum Kreismittelpunkt an, um die Größen der Bildfelder 17, 18, 19 zu verdeutlichen.

Zusätzlich zu den mindestens drei vorstehend beschriebenen Überwachungskameras 7, 8, 9 können noch weitere Überwachungskameras vorgesehen sein, insbesondere für zusätzliche oder andere Überwachungszwecke als den Außenraum um eine Baumaschine 1.

## Patentansprüche

1. Baumaschine mit einem Fahrwerk (2), mindestens einer Funktionskomponente (3), einem Chassis (4), an dem eine Kabine (5) für mindestens einen Führerstand (6) angeordnet ist, und mit an der Maschine (1) montierten Überwachungskameras (7, 8, 9), die mit wenigstens einem in der Kabine (5) angeordneten Monitor (10) verbunden sind, um das Arbeiten seitlich der oder hinter der Maschine (1) visuell überwachbar zu gestalten, mindestens drei Überwachungskameras (7, 8, 9) vorgesehen sind, die jeweils Weitwinkelobjektive aufweisen und deren Kamerabereiche Bildfelder (17, 18, 19) zur Überwachung von Außenbereichen um die Baumaschine (1) ergeben und die bezüglich ihrer Montagestelle und ihrer Fotografierrichtung derart bestimmt sind, das eine erste Überwachungskamera (7) eine Heckkamera zur Überwachung der Hinterseite der Maschine (1) ist, deren Kamerabereich eine Fotografierrichtung geneigt zur Aufstellebene (X) der Maschine (1) besitzt, eine zweite Überwachungskamera (8) eine Seitenkamera zur Überwachung der linken Seite der Maschine (1) und eine dritte Überwachungskamera (9) zur Überwachung der rechten Seite der Maschine (1) ist, deren Montagestelle an einem oberen linken (11) bzw. rechten (12) Eckbereich zur Vorderseite der Maschine (1) liegt, **dadurch gekennzeichnet, dass** die Kamerabereiche der zweiten (8) und der dritten (9) Überwachungskamera eine Fotografierrichtung jeweils in einem Winkelbereich ± 5° zur Vertikalen (Y) der Aufstellebene (X) der Maschine (1) besitzen und die zweite (8) und die dritte (9) Überwachungskamera auf unterschiedlichen Höhenniveaus zur Aufstellebene (X) der Baumaschine (1) montiert sind, wodurch deren Bildfelder (18, 19) bezüglich ihrer räumlichen Erstreckung unterschiedlich sind, und die Bildfelder (17, 18, 19) der mindestens drei Überwachungskameras (7, 8, 9) mittels einer Bildverarbeitung als Teilbildfelder zu einem Gesamtbild (20) zusammensetzbar sind, wobei das Gesamtbild (20) Schnittmengen (22) von jeweils zwei Bildfeldern (18, 19; 17, 18; 17, 19) enthält, die durch Nahtlinien (21) begrenzt sind.

2. Baumaschine nach Anspruch 1, **dadurch gekennzeichnet, dass** die Fotografierrichtung der zweiten (8) und dritten (9) Überwachungskamera im Winkelbereich ± 1,5° zur Vertikalen (Y) der Aufstellebene (X) der Maschine (1) liegt.

3. Baumaschine nach Anspruch 1 oder 2, **dadurch gekennzeichnet, dass** die Fotografierrichtung der ersten Überwachungskamera (7) in einem Winkelbereich ± 15° zu einer 45°-Neigung zur Aufstellebene (X) der Maschine (1) liegt.

4. Baumaschine nach einem der Ansprüche 1 bis 3, **dadurch gekennzeichnet dass** die zweite (8) und dritte (9) Überwachungskamera Weitwinkelobjektive mit Bildwinkeln von mindestens 135° vertikal und mindestens 130° horizontal aufweisen.

5. Baumaschine nach einem der Ansprüche 1 bis 4, **dadurch gekennzeichnet, dass** die Überwachungskameras (7, 8, 9) verschieb- und/oder verdrehbar montiert sind.

6. Baumaschine nach einem der Ansprüche 1 bis 5, **dadurch gekennzeichnet, dass** die Baumaschine (1) als Bagger-, Lade-, Fräs-, Walzen-, Fertiger- oder Transportmaschine ausgebildet ist.

## Claims

1. A construction machine having an undercarriage (2), at least one functional component (3), a chassis (4) on which a cab (5) for at least one driver's position (6) is arranged, and having monitoring cameras (7, 8, 9) which are mounted on the machine (1) and are connected to at least one monitor (10) which is arranged in the cab (5), in order to permit the visual monitoring of operations to the side or rear of the machine (1), at least three monitoring cameras (7, 8, 9) are provided which each have wide-angle lenses, and the camera ranges of which produce image fields (17, 18, 19) for monitoring the outdoor areas around the construction machine (1), and which are determined in terms of their mounting position and their photographing direction such that a first monitoring camera (7) is a rear-mounted camera for monitoring the rear side of the machine (1), the camera range of which monitoring camera (7) has a photographing direction inclined with respect to the installation plane (X) of the machine (1), a second monitoring camera (8) is a side camera for monitoring the left-hand side of the machine (1), and a third monitoring camera (9) is for monitoring the right-hand side of the machine (1), the mounting position of which is located on an upper left-hand corner region (11) or right-hand corner region (12) of the front side of the machine (1), **characterized in that** the camera ranges of the second (8) and the third (9) monitoring camera each have a photographing direction in an angular range ± 5° with respect to the vertical (Y) of the installation plane (X) of the machine (1), and the second monitoring camera (8) and the third monitoring camera (9) are mounted at different height levels with respect to the installation plane (X) of the construction machine (1), whereby their image fields (18, 19) are different with respect to their spatial extension, and the image fields (17, 18, 19) of the at least three monitoring cameras (7, 8, 9) can be composed of partial image fields by means of image processing to generate an overall picture (20), the overall picture (20) comprising intersections (22) of respectively two image fields (18, 19; 17, 18; 17, 19) which are limited by border lines (21).

2. The construction machine according to claim 1, **characterized in that** the photographing direction of the second monitoring camera (8) and the third monitoring camera (9) is located in the angular range ± 1.5° with respect to the vertical (Y) of the installation plane (X) of the machine (1).

3. The construction machine according to claim 1 or 2, **characterized in that** the photographing direction of the first monitoring camera (7) is located in an angular range ± 15° with respect to a 45° inclination with respect to the installation plane (X) of the machine (1).

4. The construction machine according to one of claims 1 to 3, **characterized in that** the second monitoring camera (8) and third monitoring camera (9) have wide-angle lenses with image angles of at least 135° vertically and at least 130° horizontally.

5. The construction machine according to one of claims 1 to 4, **characterized in that** the monitoring cameras (7, 8, 9) are mounted in a slidable and/or rotatable fashion.

6. The construction machine according to one of claims 1 to 5, **characterized in that** the construction machine (1) is embodied as an excavating machine, loading machine, milling machine, rolling machine, finishing machine or transportation machine.

## Revendications

1. Engin de construction avec un train de roulement (2), au moins une composante fonctionnelle (3), un châssis (4), au niveau duquel une cabine (5) pour au moins un poste de conducteur (6) est disposée, et avec des caméras de surveillance (7, 8, 9) montées au niveau de l'engin (1), qui sont reliées à au moins un moniteur (10) disposé dans la cabine (5) afin de configurer le fonctionnement de manière à pouvoir être surveillé visuellement sur le côté de ou derrière l'engin (1), au moins trois caméras de surveillance (7, 8, 9) sont prévus, qui présentent respectivement des objectifs à angle large et dont les zones de couverture de la caméra donnent lieu à des champs d'image (17, 18, 19) servant à surveiller des zones extérieures autour de l'engin de construction (1) et qui sont définies de telle manière par rapport à leur emplacement de montage et à leur direction de prise de vue qu'une première caméra de surveillance (7) est une caméra arrière servant à surveiller le côté arrière de l'engin (1), dont la zone de caméra possède une direction de prise de vue inclinée par rapport au plan d'installation (X) de l'engin (1), une deuxième caméra de surveillance (8) est une caméra latérale servant à surveiller le côté gauche de l'engin (1) et une troisième caméra de surveillance (9) sert à surveiller le côté droit de l'engin (1), dont l'emplacement de montage se situe au niveau d'une zone de coin supérieure à gauche (11) ou à droite (12) par rapport au côté avant de l'engin (1), **caractérisé en ce que** les zones de couverture de la caméra de la deuxième (8) et de la troisième (9) caméra de surveillance possèdent une direction de prise de vue respectivement dans une plage angulaire ± 5° par rapport à la verticale (Y) du plan d'installation (X) de l'engin (1) et la deuxième (8) et la troisième (9) caméras de surveillance sont montées sur des niveaux en hauteur différents par rapport au plan d'installation (X) de l'engin de construction (1), ce qui a pour effet que leurs champs d'images (18, 19) sont différents par rapport à leur extension spatiale et les champs d'image (17, 18, 19) des au moins trois caméras de surveillance (7, 8, 9) peuvent être assemblées en une image globale (20) au moyen d'un traitement d'images en tant que champs d'image partiels, dans lequel l'image globale (20) contient des quantités de découpe (22) de respectivement deux champs d'image (18, 19 ; 17, 18 ; 17, 19), qui sont délimités par des lignes de cordon de soudure (21).

2. Engin de construction selon la revendication 1, **caractérisé en ce que** la direction de prise de vue de la deuxième (8) et de la troisième (9) caméra de surveillance se situe dans la plage angulaire de ± 1,5° par rapport à la verticale (Y) du plan d'installation (X) de l'engin (1).

3. Engin de construction selon la revendication 1 ou 2, **caractérisé en ce que** la direction de prise de vue de la première caméra de surveillance (7) se situe dans une plage angulaire de ± 15° par rapport à une inclinaison de 45° par rapport au plan d'installation (X) de l'engin (1).

4. Engin de construction selon l'une quelconque des revendications 1 à 3, **caractérisé en ce que** la deuxième (8) et la troisième (9) caméra de surveillance présentent des objectifs à angle large avec des angles d'image d'au moins 135° de manière verticale et d'au moins 130° de manière horizontale.

5. Engin de construction selon l'une quelconque des revendications 1 à 4, **caractérisé en ce que** les caméras de surveillance (7, 8, 9) sont montées de manière à pouvoir être coulissées et/ou tournées.

6. Engin de construction selon l'une quelconque des revendications 1 à 5, **caractérisé en ce que** l'engin de construction (1) est réalisé sous la forme d'un engin excavateur, de chargement, de fraisage, de laminage, finisseur ou de transport.
